# EUROPÄISCHE PATENTSCHRIFT

(11) **EP 1 287 941 B1**
(45) Veröffentlichungstag und Bekanntmachung des Hinweises auf die Patenterteilung: **08.07.2009**
(21) Anmeldenummer: 02017571.7
(22) Anmeldetag: 07.08.2002
(51) Int. Cl.: B23K 35/36

(54) **Flussmittelzusammensetzungen zum Hartlöten von Teilen, insbesondere auf der Basis von Aluminium als Grundmaterial, sowie deren Verwendung**
Flux composition for brazing of parts, in particular with aluminum as base material, and use therof
Composition de flux au brasage des pièces, en particulièr a base d'aluminium, et utilisation

(30) Priorität: 28.08.2001 DE 10141883
(43) Veröffentlichungstag der Anmeldung: 05.03.2003
(60) Teilanmeldung: 07022656.8
(73) Patentinhaber: Behr GmbH & Co. KG, 70469 Stuttgart (DE)
(72) Erfinder: Englert, Peter, Dipl.-Ing (FH), 74177 Bad Friedrichshall (DE); Skiba, Erwin, Dipl.-Ing., 70563 Stuttgart (DE); Trautwein, Ingo, 74321 Bietigheim-Bissingen (DE)
(74) Vertreter: Grosse, Rainer

(56) Entgegenhaltungen:
- EP-A1- 0 936 024
- EP-A2- 0 980 738
- EP-A2- 1 127 653
- WO-A1-96/37336
- DE-A1- 2 614 872
- JP-A- 06 285 682
- JP-A- 08 257 790
- US-A- 3 708 449
- US-A- 4 981 526
- US-A- 5 064 482
- US-A- 5 806 752
- US-B1- 6 220 501

## Beschreibung

Die Erfindung betrifft eine Verwendung einer Hartlöt-Flussmittelzusammensetzung zum Herstellen beschichteter Formteile auf der Basis von Aluminium oder Aluminiumlegierungen.

Zum Hartlöten lotplattierter Einzelteile für Wärmetauscher, das heißt insbesondere von Kühlern wie sie in der Automobilbranche verwendet werden, ist es bei Verwendung von Aluminium beziehungsweise Aluminiumlegierungen als Grundmaterial derzeit üblich, spezielle Lötverfahren einzusetzen, insbesondere das so genannte NOCOLOK®-Löten. Dieses ist im Grundsatz in der DE-OS 26 14 872 als ein Verfahren zum Verbinden von Aluminiumkomponenten mit einer Aluminiumlötlegierung mit einem Schmelzpunkt unter dem der Aluminiumkomponenten, durch Erwärmen der zusammengesetzten Komponenten auf eine Temperatur über dem Schmelzpunkt der Lötlegierung und unter dem Schmelzpunkt der Komponenten in Anwesenheit eines Kaliumfluoaluminatschmelzmittels, das im Wesentlichen frei von nichtumgesetztem KF ist, beschrieben. Dieses bekannte Verfahren ist dadurch gekennzeichnet, dass das Schmelzmittel und die Lötlegierung auf die Oberflächen von mindestens einer der Komponenten als wässrige Aufschlämmung aus feinverteiltem Schmelzmittel und Metallpulver aufgetragen werden, der Aufschlämmungsfilm getrocknet wird und die Komponenten durch Erwärmen in einer trockenen, sauerstofffreien Inertgasatmosphäre (gegebenenfalls nach dem Zusammensetzen) verlötet werden, wobei die Anwendung der Schmelzmitel/Lötlegierungsaufschlämmung so gesteuert wird, dass 40 bis 150 g/m² angewendet werden und das Verhältnis von Schmelzmittel zu Lötlegierung so ausgewählt wird, dass mindestens 5 g/m² Schmelzmittel abgeschieden werden.

Wegen der speziellen Materialeigenschaften des Aluminiums beziehungsweise der Aluminiumlegierungen ist bei dem genannten Lötverfahren das Aufbringen eines nicht korrosiven, nicht hygroskopischen Flussmittels notwendig. Beim NOCOLOK®-Löten wird dafür ein Flussmittel auf der Basis von Kaliumfluoaluminat mit der Summenformel K₍₁₋₃₎AlF₍₄₋₆₎ verwendet. Dieses Flussmittel liegt als Eutektikum vor, schmilzt bei einer Temperatur von 562 °C bis 572 °C und entfernt das auf dem Aluminium als solchem stets als O-berflächenverunreinigung vorhandene Aluminiumoxid. Dadurch wird für kurze Zeit die Oberfläche des Al-Materials weiteren Bearbeitungsschritten wie dem Hartlöten zugänglich gemacht, was man fachsprachlich auch mit "Aktivierung der Oberfläche" bezeichnet.

Das vorstehend erwähnte nicht hygroskopische Flussmittel benetzt die Oberfläche und das Lot kann, wenn die Lotplattierung bei einer Temperatur von 577 °C zu schmelzen beginnt, durch Kapillarwirkung frei in die Lötspalte gezogen werden. Ohne einen der Lötsituation angemessenen Flussmittelauftrag ist also keine fertigungssichere, Komplettdicht-Lötung möglich.

Üblicherweise wird das genannte Flussmittel auf folgende Arten aufgebracht, was fachsprachlich als Befluxung bezeichnet wird:
a) Indem flächig als wässrige Suspension aufgesprüht wird, gefolgt von Ausblasen der Netze und anschließende Trocknung;
b) indem eine wässrige Suspension aufgepinselt wird, gefolgt von anschließender Trocknung;
c) indem das Flussmittel lokal mittels einer Kanüle als pastöse Suspension in verschiedenen Glykolen und/oder Glykolethern aufgetragen wird, gefolgt von anschließender Trocknung.

Die verschiedenen Varianten des Aufbringen des Flussmittels kommen bei unterschiedlichen Vorrichtungen zum Einsatz. Die mit a) bezeichnete Variante wird hauptsächlich bei der Befluxung von Wärmetauschernetzen und bei der Wellrippen/Rohr-Verlötung angewandt. Dies erfolgt automatisch mittels sogenannter "Sprühbefluxungseinrichtungen". Die mit b) bezeichnete Variante dient der gezielten Befluxung von beispielsweise gesteckten Kondensator-Trennwänden. Die mit c) bezeichnete Variante wird zur gezielten Innenbefluxung von beispielsweise Heizkörperböden, Trennwänden und Steckgabelkupplungen sowie zur Nachbefluxung von Rohr-Boden-Verbindungen aller Wärmetauschertypen vor dem Löten angewandt. Dies geschieht manuell mittels Kanüle durch einen Fachmann auf der Beschickungsfördereinrichtung des Lötofens und ist entsprechend lohnintensiv.

In der laufenden Fertigung treten bei allen diesen drei beschriebenen Varianten der Flussmittelapplikation die folgenden Probleme auf: Beim Innenbefluxen der vormontierten Trennwände besteht die Gefahr, dass Flussmittel in den Trocknerpatronenbereich läuft und die Funktion gefährdet wird. Eine Einzelteilbefluxung der Trennwände ist auf Grund mangelnder Haftfestigkeit der herkömmlichen Flussmittelsuspension nicht praktikabel, die entsprechenden Teile sind nicht handhabbar. Bei der mit c) bezeichneten Variante treten Probleme durch übermäßigen oder undefinierten Flussmittelauftrag auf die Bodendicke beziehungsweise auf die Trennwände/Steckgabelkupplungen, Innenrohrverbindungen und so weiter auf, die sich darin äußern, dass entweder Lötstellen nicht ausreichend befluxt sind oder der Flussmittelüberschuss bei nicht maßhaltigen Fügespalten den Spalt schließt und so eine Dichtheit des Wärmetauschers vorgetäuscht wird, obwohl keine Lötung erfolgt ist.

Des Weiteren ergeben sich aus einer eventuell erforderlichen manuellen Nachbefluxung hohe Lohnkosten. Für die Nachbefluxung der Rohr/Bodenverbindung mittels Fluxpaste beziehungsweise dem vorstehend erwähnten Flussmittel oder der Flussmittelzusammensetzung wird pro Schicht und Ofenlinie eine volle Arbeitskraft benötigt. Außerdem ist bei Nachbefluxung im Sammelrohrbereich die Zugänglichkeit stark eingeschränkt, insbesondere bei Nachbefluxung im Bereich zwischen Kondensator und Kühlmittel/Luft-Wärmetauscher Des Weiteren kommt es generell zu Verschmutzungsproblemen, insbesondere durch exzessiven Flussmittelauftrag, besonders beim Nachbefluxen, was hohe Reinigungskosten für Lötlehren, Ofenketten und Ofenmuffeln verursacht, was durch sparsameren Auftrag, der bei der derzeitig angewandten Technologie nicht möglich ist, minimiert werden könnte. Zusätzlich ergibt sich bei der Verwendung des vorstehend genannten Flussmittels beziehungsweise auch bei der Verwendung anderer im Stand der Technik wie etwa beim "CAB" [= controlled atmosphere brazing] üblicher Flussmittel das Problem, dass das zu beschichtende Material in Form von großen sogenannten Coils angeliefert wird, aus denen dann erst ein Formteil im Zuge eines Formgebungsschritts geformt wird, woran sich das Befluxen mit dem Flussmittel anschließt. Der Grund für diese komplizierte Vorgehensweise ist darin zu sehen, dass es den herkömmlichen Flussmitteln an Haftfestigkeit auf der mit Aluminiumoxid verunreinigten Oberfläche des Aluminiummetalls fehlt, weshalb das Flussmittel eben erst nach dem Formgebungsschritt auf das fertige Formteil aufgebracht wird.

Neben dem vorstehend beschriebenen Nachteil in Bezug auf die Kosten sind auch die durch die Befluxung hervorgerufenen Verschmutzungsprobleme unter Umweltgesichtspunkten bedenklich.

In der EP 0 936 014 A wird auf ein Bindemittel Bezug genommen, das eine Urethan-Verbindung als Quervernetzung von Ketten aufweist. Dies bedeutet, dass das Bindemittel kein Polyurethan als solches ist.

Die beschriebenen Probleme werden erfindungsgemäß dadurch gelöst, dass eine Hartlöt-Flussmittelzusammensetzung zum Herstellen beschichteter Formteile auf der Basis von Aluminium oder Aluminiumlegierungen verwendet wird, wobei die Hartlöt-Flussmittelzusammensetzung Folgendes enthält: zumindest ein Flussmittel, ein Lösungsmittel und ein Bindemittel, wobei das Bindemittel ein physikalisch trocknendes, organisches Polyurethan und das Flussmittel ein Flussmittel auf der Basis eines Kaliumfluoaluminats ist.

Bei der Erfindung werden unter dem Begriff Flussmittel insbesondere "fertige Flussmittel" verstanden, das heißt also Flussmittel, die neben dem eigentlichen Flussmittel im engeren Sinne noch zumindest eine Zusatzkomponente enthalten. Insofern kann es sich bei dem erfindungsgemäßen Flussmittel wiederum um Zusammensetzungen handeln.

Die zumindest eine Zusatzkomponente ist bevorzugt ein Metall, stärker bevorzugt ein pulverförmiges Metall. Noch stärker bevorzugt ist das Metall ausgewählt aus der'Gruppe, bestehend aus Aluminium und Silicium, insbesondere pulverförmiges Silicium wie es etwa in dem Flussmittel "Silflux" (hergestellt und vertrieben von der Firma Solvay) enthalten ist, oder Al-Hartlot.

Hierbei und im Folgenden wird die Formulierung "ausgewählt aus der Gruppe, bestehend aus ..." verwendet, um anzuzeigen, dass auch Mischungen der jeweils aufgezählten Einzelbestandteile verwendet werden können.

Das Bindemittel in der Flussmittel. zusammensetzung ist ausgewählt aus der Gruppe der physikalisch trocknenden Polyurethane.

Bei der Flussmittelzusammensetzung liegt bevorzugterweise das Bindemittel in einem polaren oder nicht polaren Lösungsmittel dispergiert vor.

Das Flussmittel in der Flussmittelzusammensetzung ist bevorzugt ein Flussmittel auf der Basis eines Kaliumfluoaluminats, insbesondere auf der Basis von KₙAlFₘ mit 1 ≤ m ≤ 3 und 4 ≤ n ≤ 6. Das in der erfindungsgemäßen Flussmittelzusammensetzung enthaltene Flussmittel kann insbesondere elementaranalytisch eine Zusammensetzung mit einem Gehalt an K von 20 bis 45 % , an Al von 10 bis 25 % und an F von 40 bis 60 % aufweisen.

Das bevorzugt in der Flussmittelzusammensetzung enthaltene Flussmittel liegt als Eutektikum vor, bevorzugt als Eutektikum mit einem Schmelzpunkt im Bereich von 562 °C bis 572 °C. Insbesondere handelt es sich bei dem in der Flussmittelzusammensetzung eingesetzten Flussmittel um ein CAB-Flussmittel.

Bei erfindungsgemäßer Flussmittelzusammensetzung (sogenannter Flussmittellack) enthält die Zusammensetzung, bezogen auf die gesamte Flussmittelzusammensetzung, 15 bis 50 Gew.-%, bevorzugt 15 bis 45 Gew.-% Flussmittel, 0,1 bis 30 Gew.-%, bevorzugt 1 bis 25 Gew.-% Bindemittel in einem polaren oder nicht-polaren Lösungsmittel oder Lösungsmittelgemisch.

Die Flussmittelzusammensetzung dient zum Herstellen beschichteter Formteile, insbesondere grifffest und handhabbar beschichteter Formteile auf der Basis von Aluminium oder Aluminiumlegierungen. Insbesondere kann sie im Automobilbau verwendet werden.

Beim Beschichten kann durch Anpassung der Rezeptur der Zusammensetzung die Schichtdicke und damit auch die Flussmittelmenge genau gesteuert werden. Hierbei ergibt sich der Vorteil, dass der Verbrauch an Flussmittel stark reduziert werden kann.

Bei einer besonders bevorzugten Ausführungsform enthält die erfindungsgemäße Flussmittelzusammensetzung des Weiteren mindestens 1 Gew.-%, bevorzugt 1 bis 20 Gew.-%, besonders bevorzugt 1 bis 10 Gew. % eines Thixotropiermittels. Hervorragend geeignet sind Thixotropiermittel auf der Basis von Gelatine und/oder Pektinen.

Die Flussmittelzusammensetzung mit dem Thixotropiermittel wird in bevorzugter Weise mittels eines Verfahrens hergestellt, umfassend die Schritte, dass a) die Hälfte des Lösungsmittels zusammen mit dem Bindemittel und dem Thixotropiermittel vorgelegt wird, b) unter Rühren das Flussmittel zugegeben wird und c) im letzten Schritt der Rest des Lösungsmittels hinzugegeben wird. Es hat sich als besonders günstig für die Herstellung erwiesen, wenn die Reihenfolge der Schritte a), b) und c) eingehalten wird.

Die Flussmittelzusammensetzung wird zum Herstellen mindestens teilweise beschichteter Formteile auf der Basis von Aluminium oder Aluminiumlegierungen verwendet, wobei von Rohteilen wie beispielsweise etwa Blechen oder Coils ausgegangen wird oder aber auch von bereits fertigen Formteilen.

Das Verfahren zum Herstellen beschichteter Formteile, insbesondere beschichteter Formteile für den Automobilbau auf der Basis von Al und/oder Al-Legierungen unter Einsatz der Flussmittelzusammensetzung, umfasst den Schritt, dass ein Formteil mit der vorstehend erwähnten Flussmittelzusammensetzung beschichtet wird. Anschließend kann ergänzend eine Trocknung durchgeführt werden. Bevorzugt ist es, wenn wobei in einem weiteren Schritt das gebildete beschichtete Formteil bei einer Temperatur im Bereich von 15 °C bis 70 °C, stärker bevorzugt 25 °C bis 70 °C getrocknet wird.

Die so erzeugte Flussmittelschicht auf dem Formteil ist grifffest, damit sind die beschichteten Teile auch gut handhabbar und können, ohne dass die Schicht abbröckelte, transportiert werden. Trennwände für Sammler von Flachrohrkondensatoren etwa können geschüttet werden, ohne dass dabei wesentliche Mengen der Schicht abplatzten.

Im Lötofen zersetzen sich die polymeren Bestandteile des aufgebrachten Bindemittels zu niedermolekularen flüchtigen Bestandteilen, nach der Lötung sind - richtige Applikation und Schichtdicke vorausgesetzt - keine Rückstände mehr feststellbar. Vermutlich liegt dies daran, dass die bei der thermischen Zersetzung des Bindemittels entstehenden Verbindungen Restsauerstoff binden und so die Lötatmosphäre lokal verbessern.

Das mittels des vorstehend beschriebenen Verfahrens erhältliche, beschichtete Formteil lässt sich anhand der nachfolgend beschriebenen Merkmale von Formteilen, die unter Heranziehung anderer Verfahren beschichtet wurden, unterscheiden, beispielsweise durch das Fehlen von Anhäufungen (beispielsweise im Rohr/Bodenbereich) im schlussendlich erhaltenen Flussmittelüberzug. Der Flussmittelüberzug auf dem beschichteten Formteil ist gleichmäßiger als bei anderen Verfahren. Außerdem wird bei der Lötung im Innenbereich das gesamte aufplattierte Lot aktiviert, die Lötmenisken, beispielsweise wasserseitig an der Steckgabelkupplung eines Heizkörpers, sind wesentlich stärker ausgebildet als bei Anwendung üblicher Verfahren. Im Innenbereich ergibt sich bei Einsatz des erfindungsgemäßen Verfahrens auf Grund des flächigen Flussmittelauftrags eine hellere, gleichmäßigere Fläche als bei üblichen Verfahren. Da außerdem bei Durchführung des Verfahrens die Flussmittelhaftung an der Al-Oberfläche bis zum Aufschmelzen sichergestellt ist, treten nicht Blindstellen infolge unzureichender Haftung der Flussmittelschicht und dadurch bedingter sichtbarer Verstärkung der oxidschicht auf. Da außerdem das Bindemittel -richtige Anwendung vorausgesetzt- praktisch rückstandsfrei pyrolysiert, gibt es keine Kohlenstoffrückstände ("schwarze Flecken") wie bei Verwendung üblicher Flussmittelpasten auf Glykolbasis. Dies äußert sich auch - anders als bei derzeit gängigen Verfahren - durch eine gleichmäßigere Verteilung der Kohlenstoff-Spuren auf der ganzen Fläche, während übliche Verfahren diesbezüglich zu einer inhomogenen Verteilung führen.

Insofern stellt die Erfindung auch beschichtete Formteile mit einer von Anhäufungen freien Flussmittelbeschichtung bereit, die mittels des vorstehend genannten Verfahrens zum Herstellen beschichteter Formteile erhältlich sind, welches die Schritte umfasst, dass die vorstehend beschriebene Flussmittelzusammensetzung auf einem Formteil aufgebracht wird und in einem weiteren Schritt getrocknet wird. In einem bevorzugten Fall erfolgt das Trocknen bei einer Temperatur im Bereich von 15 °C bis 70 °C, stärker bevorzugt im Bereich von 25 °C bis 70 °C.

Die so beschichteten Formteile auf der Basis von Al und/oder Al-Legierungen sind im Automobilbau verwendbar. Dabei werden in einem Hartlötverfahren, insbesondere einem Hartlötverfahren zum Herstellen verbundener Formteile auf der Basis von Aluminium oder Aluminiumlegierungen, wie vorstehend beschrieben, beschichtete Formteile hergestellt und mittels Hartlöten verbunden. Bevorzugt ist es, wenn bei diesem Hartlötverfahren das Verbinden mittels Hartlöten unter Erwärmen auf über 450 °C, bevorzugt auf über 560 °C erfolgt. Insbesondere werden mittels des Verfahrens beschichtete Formteile erhältlich und/oder mittels Hartlöten verbunden, wie sie bei der Motorkühlung verwendet werden.

Bei einer für bestimmte Anwendungszwecke, insbesondere beim direkten Beschichten von Rohteilen, beispielsweise von Coils oder Blechen noch stärker bevorzugten Ausführungsform der Flussmittelzusammensetzung enthält die Zusammensetzung des Weiteren ein Thixotropiermittel, bevorzugt ein Thixotropiermittel auf der Basis von Gelatine und/oder Pektinen. Zu solchen Thixotropiermitteln auf der Basis von Gelatine und/oder Pektinen und/oder Acrylaten und/oder Polyurethanen zählen bevorzugt insbesondere solche Zusammensetzungen, die mindestens 1 Gew.-%, bevorzugt 1 bis 20 Gew.-%, besonders bevorzugt 1 bis 10 Gew.-% des Thixotropiermittels, Rest 15 bis 50 Gew.-%, bevorzugt 15 bis 45 Gew.-% an Flussmittel sowie 0,1 bis 30 Gew.- %, bevorzugt 5 bis 25 Gew.-% an Bindemittel in einem polaren oder nicht-polaren Lösungsmittel oder Lösungsmittelgemisch enthalten.

Es wird auch ein Verfahren zur Herstellung der vorstehend erwähnten thixotropiermittelhaltigen Flussmittelzusammensetzung in der bevorzugten Ausführungsform bereitgestellt, das die Schritte umfasst, dass a) die Hälfte des Lösungsmittels zusammen mit dem Bindemittel und dem Thixotropiermittel vorgelegt wird, b) unter Rühren das Flussmittel zugegeben wird und c) im letzten Schritt der Rest des Lösungsmittels hinzugegeben wird.

Am stärksten bevorzugt ist es, wenn die vorstehend wiedergegebene Reihenfolge der Schritte eingehalten wird.

Beim Zusammengeben der vorstehend genannten Komponenten werden das Flussmittel und das Bindemittel bei einer definierten Dissolverdrehzahl von 50 bis 900 Umdrehungen/min und unter Zusatz eines Thixotropiermittels gerade so stark dispergiert, dass die damit erzielte Beschichtung mit der Mischung von Flussmittel/Bindemittel/Thixotropiermittel/Lösungsmittel nach dem Trocknen offenporig als Basisbeschichtung vorliegt, was dazu führt, dass während des Lötprozesses die organischen Anteile wie Bindemittel und Thixotropiermittel über die Poren der Beschichtung ungehindert ausgasen können.

Mit der so erhaltenen Flussmittelzusammensetzung wird gemäß einer zweiten Variante des Verfahrens zum Herstellen beschichteter Formteile, insbesondere beschichteter Formteile für den Automobilbau auf der Basis von Al und/oder Al-Legierungen a) auf mindestens einem Teil eines Rohteils, insbesondere eines Rohteils auf der Basis von Aluminium oder Aluminiumlegierungen eine flussmittelhaltige Schicht, die die vorstehend erwähnte Flussmittelzusammensetzung mit dem Thixotropiermittel enthält, in einer Schichtdicke aufgetragen, dass die für das Hartlöten erforderliche Flussmittelmenge bereitgestellt wird, und b) das beschichtete Rohteil zu einem Formteil geformt.

Die vorstehend beschriebene thixotropiermittelhaltige Flussmittelzusammensetzung wird bevorzugt durch übliche spritztechnische Verfahren aufgebracht.

Das vorstehend genannte Verfahren zum Herstellen beschichteter Formteile sollte bevorzugt im Schritt a) so geführt werden, dass die Schichtdicke, bezogen auf die Trockenschicht, auf 1 bis 20 um, bevorzugt 5 bis 15 µm eingestellt wird. Es ist bevorzugt, wenn das beschichtete Rohteil nach Schritt a) bei Normaldruck bei einer Temperatur von unter 220 °C getrocknet wird. Zur Trocknung eignet sich besonders Infrarottrocknung, insbesondere mit mittelwelligen Strahlern, deren Emissionsmaximum bei der Absorption der Olefine liegt.

Die bereitgestellte Flussmittelzusammensetzung in der bevorzugten thixotropiermittelhaltigen Ausführungsform wird bevorzugt zum Herstellen mindestens teilweise beschichteter Coils, insbesondere zum Herstellen von grifffest und handhabbar beschichteten Coils auf der Basis von Aluminium oder Aluminiumlegierungen eingesetzt, wie sie insbesondere im Automobilbau verwendet werden. Das in der Flussmittelzusammensetzung enthaltende Thixotropiermittel, bevorzugt ein Thixotropiermittel auf der Basis von Gelatine, Pektinen und/oder Polyurethanen erhöht die Haftfestigkeit der flussmittelhaltigen Schicht auf dem Rohteil. Die thixotropiermittelhaltige Flussmittelzusammensetzung auf den Rohteilen zeigt nach dem Trocknen die vorstehend beschriebene offenporige Struktur. Hierbei kann davon ausgegangen werden, dass beim Trocknen das Thixotropiermittel zumindest teilweise durch die offenen Poren ausgast.

Das so erhaltene beschichtete Rohteil kann noch zusätzlich auf seiner Beschichtung mit einer hydrophob versiegelnden Schicht versehen sein. Die hydrophobe Versiegelung dient zum einen dem Transportschutz. Zum anderen dient sie dem Umformverfahrensschritt vom beschichteten Rohteil zum Formteil. Die versiegelnde Schicht ist gegenüber der darunterliegenden Schicht hydrophob und geht mit ihr nicht eine kraftschlüssige Verbindung ein. Somit ist eine Entfernung der Versiegelung möglich, ohne dass die darunterliegende Schicht betroffen wäre.

Bei dieser Variante des Verfahrens erfolgt die hydrophobe Versiegelung durch einen Verfahrensschritt wie etwa bevorzugt der Versiegelung durch physikalisch trocknende hydrophobe Bindemittel, insbesondere Polymere.

Die Entfernung der Versiegelung erfolgt beim Umformen durch physikalische Verfahren, insbesondere durch Abdampfen, Pyrolyse und/oder Extraktion mit einem Kohlenwasserstoff, insbesondere einem Olefin.

Die bereitgestellte Flussmittelschicht weist bei beiden verfahrenstechnischen Ausführungsformen, das heißt bei Verwendung eines Thixotropiermittels, aber auch ohne dieses die folgenden Vorteile auf, nämlich dass sie grifffest ist, die beschichteten Teile handhabbar sind und transportiert werden können, wobei die Schicht beim Transport nicht abbröckelt.

Die besonders bevorzugte zweite Ausführungsform des Verfahrens, das heißt des Verfahrens, bei dem eine Flussmittelschicht und eine Versiegelungsschicht direkt auf einem Rohteil wie etwa einem Coil aufgetragen werden, weist darüber hinaus die Vorteile auf, dass geometrisch schwierige Teile, wie etwa Teile, die in Becherform vorliegen oder mit Hohlräumen versehen sind, vor dem Umformen mit einer Flussmittelschicht versehen werden können. Durch den 2-Schicht-Aufbau aus Versiegelungsschicht und flussmittelhaltiger Schicht wird auch der Werkzeugverschleiß minimiert. Des Weiteren bedeutet das Beschichten mit der Flussmittelzusammensetzung und einer leicht rein physikalisch entfernbaren Versiegelungsschicht, dass der in den Lötofen eingebrachte organische Anteil keinen Einfluss auf die Ofenatmosphäre ausübt und dass keine Crackprodukte auf der Metalloberfläche entstehen, die eine Lötung negativ beeinflussen könnten.

Insbesondere beim umgeformten Mehrkammerrohr bringt eine Applikation des Flussmittels auf dem Coil beziehungsweise einem Teilstück davon bereits vor dem Umformen noch zusätzlich erhebliche Vorteile in Hinsicht auf die Prozesssicherheit und die Maßhaltigkeit der Rohre mit sich. Außerdem ist die direkte Beschichtung des Rohteils, in diesem speziellen Fall des Coils als flächiger Auftrag gleichmäßiger, ökonomischer und mit höherem Wirkungsgrad (80 bis 90 %) möglich als es bei der Beschichtung von Einzelteilen erst nach dem Umformprozess möglich ist.

Durch den Bezug von extern beschichteten Rohteilen wie den Coils in konstanter Qualität entfällt auch der Arbeitsgang des Aufbringens einer Flussmittelschicht. Die Fertigungslinien können mit erheblich geringerer Peripherie und damit auch bei erheblich geringeren Kosten betrieben werden. Die ständige, bereits vorstehend schon erwähnte Schmutzquelle der "Netzbefluxungo" [der vorstehend erwähnten Variante a)] gemäß dem bisherigen üblichen Verfahren gemäß dem Stand der Technik entfällt ebenso wie auch die gesamte Flussmittellogistik. Hinzu kommt noch, dass bei der besonders bevorzugten Entfernung der Versiegelung unter Zuhilfenahme des Umformöles, das Umformöl gleichzeitig als Lösemittel verwendet werden kann. Ebenso ist eine Kreislaufführung des Umformöls mittels Destillation möglich. Ein noch verbleibender Restfilm kann dann durch Thermoentfettung entfernt werden.

Die Erfindung wird nachfolgend durch Beispiele noch detaillierter erläutert, die jedoch nicht einschränkend zu verstehen sind.

### Herstellungsbeispiel

Herstellung des Flussmittellackes
- Gemischt wurden:
   PU-Bindemittel 300 ml
- VE-Wasser: 700 ml
- Diese Mischung wurde verrührt mit NOCOLOK-Flux (SOLVAY) 800 g
- 30 min mit einer Rührgeschwindigkeit von 200 min⁻¹ weiterrühren
- Filtrieren der Mischung über Edelstahlsieb mit einer Maschengröße von 250µm

Hieraus ergaben sich 1,8 kg gebrauchsfertige Mischung mit der nachfolgenden Zusammensetzung:

| | |
|---|---|
| Flussmittel: | 45 Gew.-% |
| PU-Binder: | 2,6 Gew.-% |
| Rest: | VE-Wasser |

### Anwendungsbeispiel

### Lackierparameter:

| | |
|---|---|
| V_{Kette}: | 0, 5 bis 4 m/min |
| V_{Oszill}: | ca. 30 m/min |
| Sprühabstand | 150 bis 350 mm |
| Düsenöffnung | 0,5 bis 1,2 mm |
| Strahlform: | Flachstrahl, Fächer, Öffnungswinkel ca. 60° |
| Materialdruck: | 0,5 bar |
| Zerstäuberdruck: | 2,5 bar |
| Trocknungstemperatur: | 50 °C |

### Ergebnisse

Mit den Einstellungen von Anwendungsbeispiel 1 und der unter Herstellungsbeispiel 1 beschriebenen Beschichtungsmasse wurde ein Schichtgewicht (Trockenschicht) von 25 g/m² erreicht. Die gemessene Schichtdicke betrug durchschnittlich 15 µm.

## Patentansprüche

1. Verwendung einer Hartlöt-Flussmittelzusammensetzung zum Herstellen beschichteter Formteile auf der Basis von Aluminium oder Aluminiumlegierungen, wobei die Hartlöt-Flussmittelzusanimensetzung Folgendes enthält: zumindest ein Flussmittel ein Lösungsmittel und ein Bindemittel, wobei das Bindemittel ein physikalisch trocknendes, organisches Polyurethan und das Flussmittel ein Flussmittel auf der Basis eines Kaliumfluoaluminats ist, und wobei die Flussmittelzusammensetzung 15 bis 50 Gew.-%, bevorzugt 15 bis 45 Gew.-% Flussmittel und 0,1 bis 30 Gew.-%, bevorzugt 1 bis 25 Gew.-% Bindemittel in einem polaren oder nicht-polaren Lösungsmittel oder Lösungsmittelgemisch dispergiert enthält.

2. Verwendung nach Anspruch 1, wobei das Flussmittel ein zusatzkomponentenhaltiges Flussmittel ist.

3. Verwendung nach Anspruch 2, wobei die Zusatzkomponente ein Metall, bevorzugt ein pulverförmiges Metall ist.

4. Verwendung nach Anspruch 2 oder 3, wobei das Metall ausgewählt ist aus der Gruppe, bestehend aus Silicium und/oder Aluminium.

5. Verwendung nach einem der vorhergehenden Ansprüche, wobei das Bindemittel in einem polaren oder nicht polaren Lösungsmittel dispergiert vorliegt.

6. Verwendung nach einem der vorhergehenden Ansprüche, wobei das Kaliumfluoaluminat die Basis von KₙAlFₘ mit 1 ≤ m ≤ 3 und 4 ≤ n ≤ 6 aufweist.

7. Verwendung nach einem der vorhergehenden Ansprüche, wobei das Flussmittel eine Zusammensetzung, ermittelt mittels Elementaranalyse, von 20 bis 45 % K, 10 bis 25 % Al und 40 bis 60 % F aufweist.

8. Verwendung nach einem der vorhergehenden Ansprüche, wobei das Flussmittel als Eutektikum, bevorzugt als Eutektikum mit einem Schmelzpunkt im Bereich von 562°C bis 572°C vorliegt.

9. Verwendung nach einem der vorhergehenden Ansprüche, wobei die Flussmittelzusammensetzung des Weiteren mindestens 1 Gew.-%, bevorzugt 1 bis 20 Gew.-%, besonders bevorzugt 1 bis 10 Gew.-% eines Thixotropiermittels enthält.

10. Verwendung nach Anspruch 9, enthaltend ein Thixotropiermittel auf der Basis von Gelatine und/oder Pektinen.

## Claims

1. Use of a brazing flux composition for the manufacture of coated formed parts on the basis of aluminum or aluminum alloys, wherein the brazing flux composition comprises the following: at least a flux, a solvent and a binder, wherein the binder is a physically drying, organic polyurethane and the flux is a flux on the basis of a potassium fluoaluminate, and wherein the flux composition contains flux at 15 to 50 % by weight, preferably 15 to 45 % by weight and binder at 0.1 to 30 % by weight, preferably 1 to 25 % by weight, dispersed in a polar or non-polar solvent or solvent mixture.

2. Use according to claim 1, wherein the flux is an additional component containing flux.

3. Use according to claim 2, wherein the additional component is a metal, preferably a powdered metal.

4. Use according to claim 2 or 3, wherein the metal is selected from the group consisting of silicon and/or aluminum.

5. Use according to any one of the preceding claims, wherein the binder is present in dispersed form in a polar or non-polar solvent.

6. Use according to any one of the preceding claims, wherein the potassium fluoaluminate comprises the base of KₙAlFₘ with 1 ≤ m ≤ 3 and 4 ≤ n ≤ 6.

7. Use according to any one of the preceding claims, wherein the flux comprises a composition of 20 to 45 % K, 10 to 25 % Al and 40 to 60 % F, determined by means of elemental analysis.

8. Use according to any one of the preceding claims, wherein the flux is provided as a eutectic, preferably as a eutectic with a melting point ranging from 562°C to 572°C.

9. Use according to any one of the preceding claims, wherein the flux composition furthermore includes a thixotropic agent at a minimum of 1 % by weight, preferably 1 to 20 % by weight, particularly preferably 1 to 10 % by weight.

10. Use according to claim 9, comprising a thixotropic agent on the basis of gelatin and/or pectins.

## Revendications

1. Utilisation d'une composition fluide pour brasage destinée à fabriquer des pièces moulées revêtues, à base d'aluminium ou d'alliages d'aluminium, la composition fluide pour brasage contenant les composants suivants : au moins un fluide, un solvant et un liant, dans laquelle utilisation le liant est un polyuréthane organique physiquement sec et le fluide est un fluide à base d'un fluoroaluminate de potassium et dans laquelle utilisation la composition fluide pour brasage comprend sous forme dispersée de 15 à 50 % en poids, de préférence de 15 à 45 % en poids de fluide et de 0,1 à 30 % en poids, de préférence de 1 à 25 % en poids de liant dans un solvant polaire ou non polaire ou dans un mélange de solvant.

2. Utilisation selon la revendication 1, dans laquelle le fluide est un fluide comprenant un composant additionnel.

3. Utilisation selon la revendication 2, dans laquelle le composant additionnel est un métal, de préférence un métal pulvérulent.

4. Utilisation selon la revendication 2 ou 3, dans laquelle le métal est sélectionné dans le groupe se composant de silicium et / ou d'aluminium.

5. Utilisation selon l'une quelconque des revendications précédentes, dans laquelle le liant est présent sous forme dispersée dans un solvant polaire ou non polaire.

6. Utilisation selon l'une quelconque des revendications précédentes, dans laquelle le fluoroaluminate de potassium présente une base de KₙAlFₘ avec 1 ≤ m ≤ 3 et 4 ≤ n ≤ 6.

7. Utilisation selon l'une quelconque des revendications précédentes, dans laquelle le fluide présente une composition, déterminée au moyen d'une analyse élémentaire, comprenant de 20 à 45 % de potassium, de 10 à 25 % d'aluminium et de 40 à 60 % de fluor.

8. Utilisation selon l'une quelconque des revendications précédentes, dans laquelle le fluide est présent en tant que mélange eutectique présentant un point de fusion s'inscrivant dans une plage allant de 562 °C à 572 °C.

9. Utilisation selon l'une quelconque des revendications précédentes, dans laquelle la composition fluide comprenant, en outre, au moins 1 % en poids, de préférence 1 à 20 % en poids, de manière particulièrement préférée de 1 à 10 % en poids d'un agent thixotrope.

10. Utilisation selon la revendication 9, comprenant un agent thixotrope à base de gélatine et/ou de pectines.
